# FASCICULE DE BREVET EUROPEEN

(11) **EP 3 105 473 B1**
(45) Date de publication et mention de la délivrance du brevet: **14.03.2018**
(21) Numéro de dépôt: 15705671.4
(22) Date de dépôt: 30.01.2015
(51) Int. Cl.: F16H 59/04, F16H 61/18

(54) **DISPOSITIF DE MANOEUVRE D'UN CÂBLE D'ACTIONNEMENT ET UTILISATION DANS UN DISPOSITIF DE COMMANDE D'UN VERROU DE MARCHE ARRIÈRE D'UNE BOITE DE VITESSES D'UN VÉHICULE AUTOMOBILE**
VORRICHTUNG ZUM BETRIEB EINES BETÄTIGUNGSKABELS UND VERWENDUNG BEI EINER RÜCKWÄRTSGANGSPERRSTEUERUNG EINES KRAFTFAHRZEUGGETRIEBES
DEVICE FOR OPERATING AN ACTUATING CABLE AND USE IN A MOTOR VEHICLE GEARBOX REVERSE GEAR LATCH CONTROL

(30) Priorité: 14.02.2014 FR 1451190
(43) Date de publication de la demande: 21.12.2016
(73) Titulaire: PSA Automobiles SA, 78300 Poissy (FR)
(72) Inventeur: POIRRIER, Pascal, F-70290 Champagney (FR); ORHANT, Mathieu, F-25400 Audincourt (FR); SAILLARD, Laurent, F-90400 Danjoutin (FR); CESCA, Bruno, F-90150 Phaffans (FR)
(86) Numéro de dépôt international: PCT/FR2015/050223
(87) Numéro de publication internationale: WO 2015/121561

(56) Documents cités:
- DE-A1-102012 008 026
- DE-B3-102005 062 167
- FR-A1- 2 775 226

## Description

La présente invention concerne un dispositif de manoeuvre d'un câble d'actionnement et son utilisation pour la commande d'un verrou de marche arrière d'une boîte de vitesses d'un véhicule automobile, tel que connu de DE 10 2005 062167 B3 divulguant toutes les caractéristiques du préambule de la revendication 1.

### ARRIÈRE-PLAN DE L'INVENTION

On sait que pour éviter un passage intempestif en marche arrière alors qu'un véhicule automobile roule vers l'avant, certains véhicules automobiles sont équipés d'un verrou de marche arrière dont l'escamotage est commandé par un câble d'actionnement relié à une gâchette en forme de bague portée par le levier de changement de vitesse. Le verrou est rappelé vers une position de verrouillage par un ressort. Pour éviter un claquement du verrou lors de son retour en position verrouillée, les systèmes actuels sont généralement pourvus d'une rondelle en mousse interposée entre la gâchette et le levier. Ces systèmes sont efficaces pour ralentir le déplacement de la gâchette selon une direction axiale du levier de changement de vitesse, et par voie de conséquence de réduire le claquement du verrou lorsqu'il atteint sa position de verrouillage. Toutefois, pour minimiser l'effort nécessaire pour la manoeuvre de la gâchette, celle-ci est montée sur le levier avec un jeu important et lors du roulage du véhicule, des vibrations auxquelles le levier est soumis génèrent du bruit en raison des chocs répétés de la gâchette sur le côté du levier.

### OBJET DE L'INVENTION

Le but de l'invention est de proposer un dispositif de manoeuvre d'un câble d'actionnement comprenant une bague qui est montée pour coulisser sur un levier, qui ne génère pas de bruit lorsque le levier est soumis à des vibrations, et son utilisation dans un dispositif de commande d'un verrou de marche arrière d'une boîte de vitesses d'un véhicule automobile.

### BRÈVE DESCRIPTION DE L'INVENTION

En vue de la réalisation de ce but, on propose selon l'invention un dispositif de manoeuvre d'un câble d'actionnement comprenant une bague qui est montée pour coulisser sur un levier et qui est reliée à une extrémité du câble d'actionnement rappelé par un ressort dans une position de repos pour laquelle la bague est en appui sur une partie du levier par l'intermédiaire d'un premier organe élastique qui est monté fixe par rapport à l'un de la bague et du levier et sur lequel prend appui une première butée portée par l'autre de la bague et du levier, et un deuxième organe élastique qui est fixé à l'un de la bague et du levier en étant espacé du premier organe élastique selon une direction axiale du levier, et qui est monté pour coulisser librement par rapport à l'autre de la bague et du levier.

Ainsi la bague est maintenue écartée du levier sur toute sa longueur et ne vient donc pas heurter le levier lorsque celui-ci est soumis à des vibrations. Le premier organe élastique est un joint torique de section circulaire et la première butée est conique. On s'assure ainsi d'un centrage de la bague sur le levier.

Selon un autre aspect avantageux de l'invention, l'autre de la bague et du levier comporte une butée coaxiale au deuxième organe élastique annulaire. On augmente ainsi l'amortissement du mouvement de la bague selon la direction longitudinale du levier.

Selon encore d'autres aspects avantageux de l'invention, le deuxième organe élastique est un joint torique de section circulaire, et les butées et les organes élastiques correspondants sont configurés pour être simultanément en contact les uns avec les autres pour une position de repos du dispositif. On s'assure ainsi d'un centrage de la bague sur toute sa longueur.

Selon encore un autre aspect de l'invention, celle-ci concerne une utilisation du dispositif de manoeuvre d'un câble d'actionnement à la commande d'un verrou de marche arrière d'une boîte de vitesses d'un véhicule automobile relié à un câble d'actionnement, le câble d'actionnement étant relié à un dispositif de manoeuvre selon l'invention.

### DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:

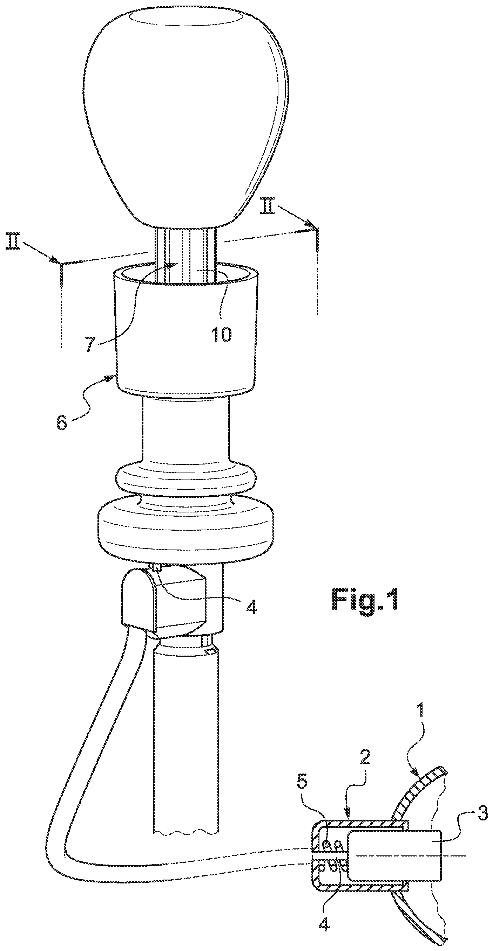

- La figure 1 est une vue en perspective schématique d'un dispositif de commande d'un verrou de marche arrière d'une boîte de vitesses d'un véhicule automobile comportant le dispositif de manoeuvre selon l'invention,

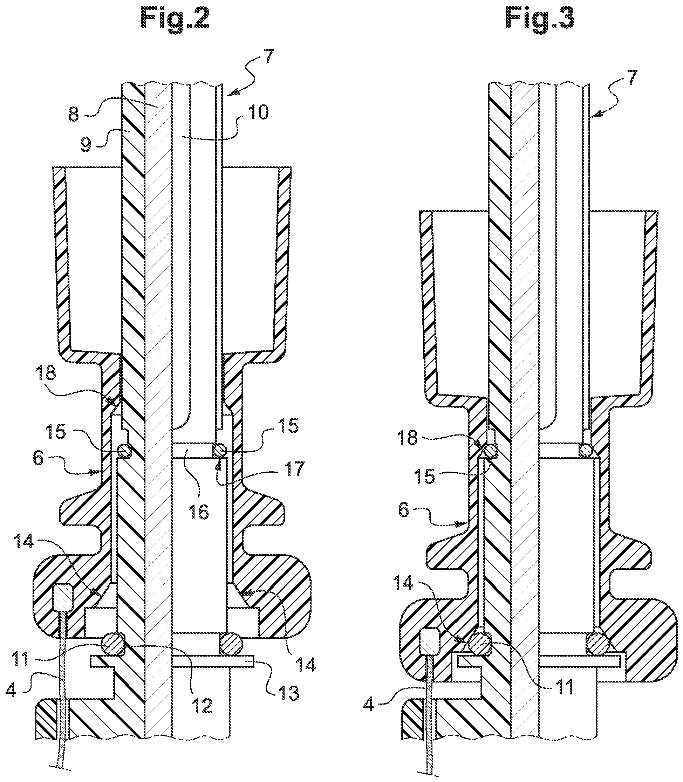

   - La figure 2 est une vue en coupe selon le plan II-II de la figure 1, du dispositif de manoeuvre dans la position le déverrouillage, le levier étant représenté en coupe sur la moitié gauche de la figure et en vue de côté sur la moitié droite de la figure,
   - La figure 3 est une vue en coupe analogue à celle de la figure 2, en position de verrouillage.

### DESCRIPTION DETAILLÉE DE L'INVENTION

En référence aux figures, le dispositif de manoeuvre selon l'invention va maintenant être décrit dans son utilisation dans un dispositif de commande d'un verrou de marche arrière d'une boîte de vitesses d'un véhicule automobile.

De façon connue en soi, le véhicule automobile comporte une boîte de vitesses symbolisée par une partie de son carter 1 sur lequel est monté un verrou de marche arrière 2 comprenant un doigt de verrouillage 3 coopérant avec un élément de boîte de vitesses non représenté sur la figure. Le doigt de verrouillage 3 est relié à un câble d'actionnement 4, et est rappelé vers la position de verrouillage par un ressort 5. À son extrémité opposée au doigt de verrouillage 3, le câble d'actionnement 4 est relié à une bague 6 montée pour coulisser sur le levier de changement de vitesse 7. De façon également connue en soi, le levier de changement vitesse comporte une tige centrale métallique 8 sur laquelle est surmoulé un revêtement en matière plastique 9 comportant des nervures 10 coopérant avec des reliefs internes de la bague 6 pour empêcher la bague de tourner par rapport au levier, ce qui limite les mouvements de la bague 6 à un mouvement de coulissement selon la direction longitudinale du levier 7. La bague 6 a de façon générale un diamètre interne suffisant pour coulisser librement sur le levier 7.

Selon l'invention, le levier porte un premier joint torique de section circulaire 11 partiellement encastré dans une rainure annulaire 12 et prenant appui sur une couronne 13 formant partie intégrante du revêtement 9. En regard du joint torique 11, la bague 6 comporte une butée conique 14 formée ici par une partie inclinée de la paroi interne de la bague 6.

Le dispositif de manoeuvre comporte en outre un deuxième joint torique 15 fixé au levier 7 par encastrement dans une rainure circulaire 16 et prenant appui sur un épaulement 17 du levier 7. En regard du joint torique 15, la bague comporte une butée conique 18 formée comme la butée 14 par une partie inclinée de la paroi interne de la bague 6.

La distance entre les rainures d'encastrement 12 et 16, et la dimension des joints toriques 11 et 15 sont déterminées pour que, lorsque la bague 6 est relâchée, la butée 14 vienne en contact avec le joint 11 alors que la butée 18 est encore espacée du joint 15. Un écrasement progressif du joint 11 assure simultanément un amortissement du mouvement de descente de la bague 6 et un centrage de l'extrémité inférieure de la bague par rapport au levier 7. En fin de course de la bague 6, la butée 18 entre en contact avec le joint torique 15 ce qui assure un centrage de l'extrémité supérieure de la bague 6 de sorte que celle-ci n'entre plus en contact radial avec le levier 7 lorsque le levier 7 est soumis à des vibrations.

Bien entendu l'invention n'est pas limitée au mode de réalisation décrit et on peut y apporter des variantes de réalisation sans sortir du cadre de l'invention telle que définie par les revendications. En particulier, bien que le dispositif de manoeuvre selon l'invention ait été décrit en relation avec une utilisation pour la commande d'un verrou de marche arrière d'une boîte de vitesses d'un véhicule automobile, le même dispositif de commande peut servir dans d'autres domaines.

Bien que l'invention ait été décrite en utilisant des joints toriques de section circulaire, l'invention peut également être réalisée en utilisant des organes élastiques ayant d'autres configurations en fonction du domaine d'utilisation du dispositif de manoeuvre. En particulier, bien que dans le mode de réalisation préféré de l'invention les deux joints toriques soient en contact avec une butée axiale, le dispositif peut être réalisé avec un deuxième organe élastique simplement configuré pour empêcher un contact latéral direct entre la bague et le levier.

Bien que l'invention ait été illustrée avec des joints portés par le levier et des butées coniques portées par la bague, les joints peuvent être portés par la bague, les butées, coniques ou non, étant alors portées par le levier.

## Revendications

1. Dispositif de manoeuvre d'un câble d'actionnement (4) comprenant une bague (6) qui est montée pour coulisser sur un levier (7) et qui est reliée à une extrémité du câble d'actionnement rappelé par un ressort dans une position de repos pour laquelle la bague est en appui sur une partie du levier par l'intermédiaire d'un premier organe élastique (11) qui est monté fixe par rapport à l'un de la bague et du levier et sur lequel prend appui une première butée (14) portée par l'autre de la bague et du levier, le dispositif comportant un deuxième organe élastique (15) qui est fixé à l'un de la bague et du levier en étant espacé du premier organe élastique (11) selon une direction axiale du levier, et qui est monté pour coulisser librement par rapport à l'autre de la bague et du levier, **caractérisé en ce que** le premier organe élastique (11) est un joint torique de section circulaire, et **en ce que** la première butée (14) est conique.

2. Dispositif selon la revendication 1, **caractérisé en ce que** ledit l'autre de la bague et du levier comporte une butée (18) coaxiale au deuxième organe élastique (15).

3. Dispositif selon la revendication 2, **caractérisé en ce que** le deuxième organe élastique (15) est un joint torique de section circulaire, et **en ce que** la deuxième butée est conique.

4. Dispositif selon la revendication 3, **caractérisé en ce que** les butées (14,18) et les organes élastiques correspondants (11,15) sont configurés pour être simultanément en contact les uns avec les autres pour une position de repos du dispositif.

5. Dispositif de commande d'un verrou de marche arrière (2) d'une boite de vitesse (1) d'un véhicule automobile relié à un câble d'actionnement (4), **caractérisé en ce que** le câble d'actionnement est relié à un dispositif de manoeuvre selon l'une des revendications 1 à 4.

## Patentansprüche

1. Vorrichtung zum Betrieb eines Betätigungskabels (4) umfassend einen Ring (6), der zum Gleiten auf einem Hebel (7) montiert ist und der mit einem Ende des Betätigungskabels verbunden ist, das durch eine Feder in eine Ruhestellung rückgeholt wird, für die der Ring auf einem Teil des Hebels mittels eines ersten elastischen Elements (11) abgestützt ist, das fest bezüglich eines des Rings und des Hebels montiert ist und auf dem ein erster Anschlag (14), der von dem anderen des Rings und des Hebels getragen wird, abgestützt ist, wobei die Vorrichtung ein zweites elastisches Element (15) umfasst, das in einem Abstand von dem ersten elastischen Element (11) in axialer Richtung des Hebels an eines des Rings und des Hebels befestigt ist und das zum freien Gleiten bezüglich des anderen des Rings und des Hebels montiert ist, **dadurch gekennzeichnet, dass** das erste elastische Element (11) ein O-Ring mit kreisförmigem Querschnitt ist und dass der erste Anschlag (14) konisch ist.

2. Vorrichtung nach Anspruch 1, **dadurch gekennzeichnet, dass** das andere des Rings und des Hebels einen koaxialen Anschlag (18) am zweiten elastischen Element (15) umfasst.

3. Vorrichtung nach Anspruch 2, **dadurch gekennzeichnet, dass** das zweite elastische Element (15) ein O-Ring mit kreisförmigem Querschnitt ist, und dass der zweite Anschlag konisch ist.

4. Vorrichtung nach Anspruch 3, **dadurch gekennzeichnet, dass** die Anschläge (14, 18) und die entsprechenden elastischen Elemente (11, 15) konfiguriert sind, um gleichzeitig in Kontakt miteinander für eine Ruhestellung der Vorrichtung zu stehen.

5. Vorrichtung zur Rückwärtsgangsperrsteuerung (2) eines Getriebes (1) eines Kraftfahrzeugs, die mit einem Betätigungskabel (4) verbunden ist, **dadurch gekennzeichnet, dass** das Betätigungskabel mit einer Betätigungsvorrichtung nach einem der Ansprüche 1 bis 4 verbunden ist.

## Claims

1. Device for manoeuvring an actuation cable (4), comprising a ring (6) that is mounted so as to slide on a lever (7) and is connected to one end of the actuation cable returned by a spring into an idle position in which the ring is in abutment on a part of the lever through a first resilient member (11) that is mounted fixed with respect to either the ring or the lever and on which there bears a first stop (14) carried by the other one of the ring or lever, a device comprising a second resilient member (15) that is fixed to either the ring or the lever while being spaced apart from the first resilient member (11) in an axial direction of the lever, and is mounted so as to slide freely with respect to the other one of the ring or lever, **characterised in that** the first resilient member (11) is an O-ring seal with a circular cross-section, and **in that** the first stop (14) is conical.

2. Device according to claim 1, **characterised in that** said other one of the ring or lever comprises a stop (18) coaxial with the second resilient member (15).

3. Device according to claim 2, **characterised in that** the second resilient member (15) is an O-ring seal with a circular cross-section, and **in that** the second stop is conical.

4. Device according to claim 3, **characterised in that** the stops (14, 18) and the corresponding resilient members (11, 15) are configured so as to be simultaneously in contact with one another in an idle position of the device.

5. Device for controlling a reverse-gear bolt (2) on a gearbox (1) of a motor vehicle connected to an actuation cable (4), **characterised in that** the actuation cable is connected to a manoeuvring device according to any of claims 1 to 4.
